# EUROPEAN PATENT SPECIFICATION

(11) **EP 2 868 954 B1**
(45) Date of publication and mention of the grant of the patent: **14.03.2018**
(21) Application number: 14184670.9
(22) Date of filing: 12.09.2014
(51) Int. Cl.: F16K 31/54, F16K 3/02, F16K 3/06

(54) **Device for closing a pipe**
Vorrichtung zum Abschliessen eines Rohrs
Dispositif pour fermer une conduite

(30) Priority: 12.09.2013 IT BO20130485; 12.09.2013 IT BO20140486
(43) Date of publication of application: 06.05.2015
(73) Proprietor: I.S.I.F. S.R.L., 52020 Castelfranco di Sopra (AR) (IT)
(72) Inventor: Odori, Mauro, 52020 Castelfranco di Sopra (AR) (IT)
(74) Representative: Ruzzu, Giammario

(56) References cited:
- DE-U1- 20 022 083
- US-A- 1 002 948
- US-A- 1 381 938
- US-A- 1 727 644
- US-A- 4 275 866
- US-A- 5 899 438
- US-A1- 2013 221 252

## Description

### DESCRIPTION OF THE INVENTION

The present invention relates to the technical field concerning the equipment for performing installation, repair and/or maintenance operations of pipes, which carry fluids under pressure, for example gas, water, hydrocarbons and the like, without interrupting the service and avoiding the dispersion of polluting substances in the environment.

When one of said pipes breaks, a sufficiently length thereof in the region of the break is isolated, and the upstream and downstream sections are connected to each other by means of a temporary pipeline, so as to create a by-pass, in which the flow of fluid will be deviated without interruption.

This type of operation requires specialized equipment. In a more detailed way, the operation includes the perforation of the pipe in two points, then, the application of a connector and a valve (called "flat valve" in jargon) to each of the two points and fastening of the respective plugging machines, which are connected to said temporary pipeline. Each of these machines includes means adapted to be introduced in the underlying pipe, passing through the flat valve and connector and to be subsequently operated to close the pipe at the beginning and at the end of the length to be isolated, for example, by radial expansion of sealing rings.

A conventional flat valve is substantially constituted by two half-shells, which have a through hole aimed at being coaxial with the connector. A circular sector shaped blade, contained between the half-shells, is pivoted at the centre and aimed at oscillating between an open position, in which the hole and connector are in communication, and a closed position, in which they are separated.

The flat valves remain closed until the respective plugging machines have been installed and are then opened by acting on a gudgeon, for example having a square or hexagonal section, integral with the fulcrum of the blade and projecting from the half-shells, so as to be engaged with a tool, a key or the like.

The actuation of the blade, either by opening or closing motion, is quite difficult due to the fact that, acting on the fulcrum, the lever arm is unfavourable, worsened by the pressure of the fluid, which pushes perpendicular onto the blade, thus increasing the friction.

Moreover, the seat, in which the blade is moving, is in communication with the pipeline and is invaded by the fluid that passes therein so that, when the operation is finished, it is necessary to accurately clean the flat valve.

The combination of these drawbacks can cause situations, in which the valve is blocked not just because of mechanical blocking, but because the operation requires a force bigger than the force that anybody can normally apply.

Moreover, the described conformation involves problems also from the constructive point of view. Indeed, elements having a semicircular form must match with others with limited tolerances, both as to dimensions and shape, assuring at the same time the necessary tightness against leakages. This requirement imposes the use of very precise machine tools, which results in inevitable increase of the costs.

The US 1381938 discloses a device for closing a pipeline for conveying or conducting paper stock or other fibrous materials held in suspension in water. The valve includes two body portions coupled to each other and defining a guideway therebetween, into which a gate is inserted for sliding up and down, thus closing or opening the valve. The gate is usually operated manually but includes also a rack and pinion system for forcing the gate when it gets sticked due to long non-use time. Tightness (in particular at bottom) of the guideway is obtained through the deposit of paper fibers in the flow passing through the pipe.

The US 4275866 discloses a valve very similar to the one of US 1381938.

In both these two references, the gate extends outwards of the guideway and the tightness is not ensured. While the valves of US 1381938 and US 4275866 can be suitable for pipes extending in horizontal only, and the open side of the guideway formed between the half-shells faces upwards,

they cannot be safely used in a vertical pipe, and in particular in pipes along which inflammable gas flows, as they would create a rather hazardous condition.

The US 1002948 discloses a gate valve in which the gate is pivoted along the base side of a triangle-like casing. A rack-worm system allows operation of the gate which oscillates closing or opening a through hole in the casing.

### OBJECTS OF THE INVENTION

Therefore, it is an object of the present invention to propose a device for closing a pipeline which, although considered a flat valve, is shaped in an original and innovative way and is able to overcome the limits and drawbacks reported by the prior art solutions, in particular in order to reduce the effort necessary for actuation.

Another object of the invention is to obtain a device, in which the passing fluid does not contact the areas adjacent to the hole communicating with the pipeline, thereby reducing the dispersion of the polluting material and the maintenance of the same device.

Yet another object of the invention is to obtain a device, whose dimensions are compact and which is constituted by elements of simple shape, so that its construction is easier and cheaper.

A further object of the invention is to obtain a device that can be used in combination with connectors and plugging machines of known type, without the necessity of any adjustment.

These and other objects have been fully obtained by a device for closing a pipeline, with the latter applied to a branching from a pipe for the transport of fluids, said device being of the type designed to be manoeuvred from outside to define an open position and a closed position, respectively, to allow or prevent, the inflow of said fluid towards the above mentioned branching pipeline, substantially constituted in accordance with the content of claim 1, respectively 3. The dependent claims disclose various embodiments and variations of the invention.

### BRIEF DESCRIPTION OF THE DRAWINGS

The characteristics of the invention will become evident from the following description of preferred embodiments of the device for closing a pipeline under discussion, in accordance with the contents of the claims and with the help of the enclosed figures, in which:
- Fig. 1 is an axonometric view of a first embodiment of the device under discussion;
- Fig. 2 is a top view of the device of Fig. 1, which shows an internal member with broken line;
- Fig. 3 is a vertical section view of the device, taken along the plane II-II of Fig. 2;
- Figs. 4A, 4B are schematic views similar to that of Fig. 2, of two characteristic positions of an internal member of the device;
- Fig. 5 is an axonometric view of a variation of the first embodiment of the device;
- Fig. 6 is a top view of the device of Fig. 5;
- Fig. 7 is a vertical section view of the device, taken along the section line VII-VII of Fig. 6;
- Figs. 8A, 8B are schematic views similar to that of Fig. 2, of two characteristic positions of an internal member of the device;
- Fig. 9 is an axonometric, partially exploded view of a second device, not part of the invention;
- Fig. 10 is a vertical section view of the second device; and
- Fig. 11 is a top schematic view of two characteristic positions of an internal member of the second device, not part of the invention.

### DETAILED DESCRIPTION OF THE INVENTION

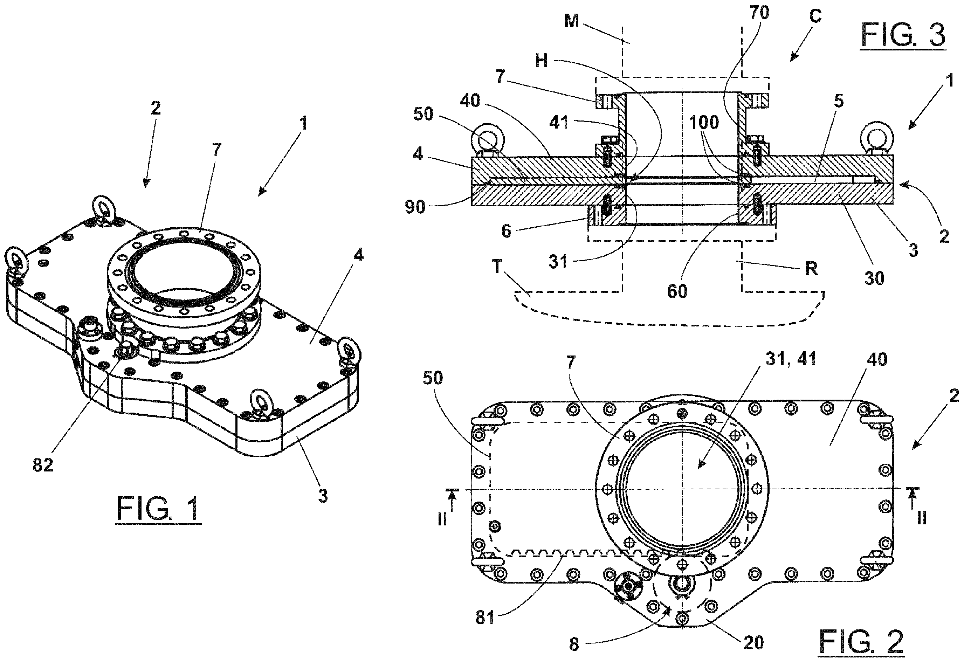

In the above Figures 1 to 8B, the reference number 1 indicates the closing device subject of the present invention as a whole, according to a first embodiment.

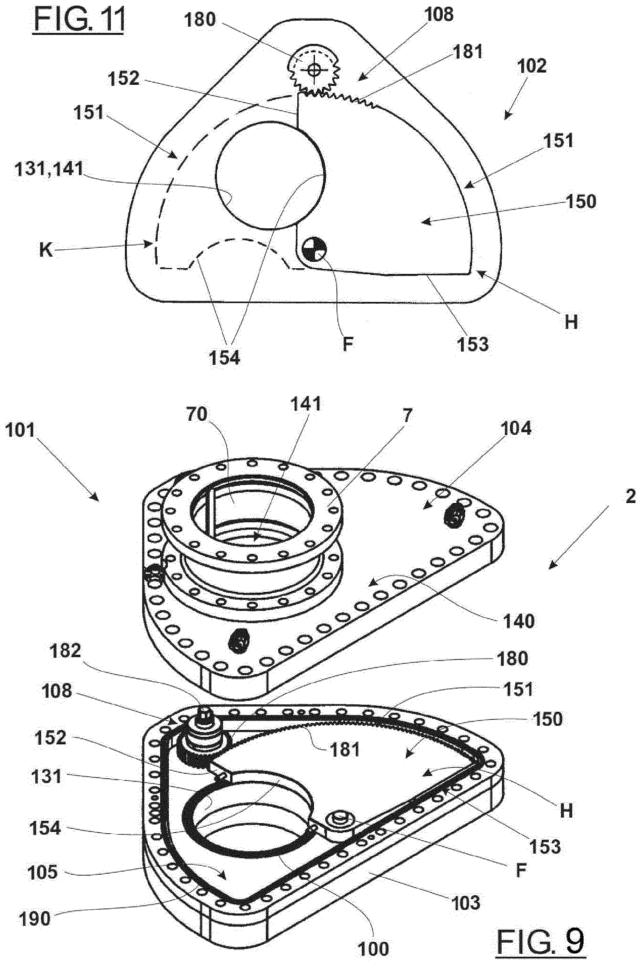

Figures 9 to 11 refer to a second device, not part of the invention, in which the device has been indicated with 101. In general, all the reference numbers that indicate the elements of the first embodiment have been used to indicate the same elements of the second device, adding 100.

The devices 1, 101 identify a valve, known in the relative sector as a flat valve, which, as already described in the introductory note, is intended to be associated, together with another one, with a pipeline C applied as a branch to a pipe T for the transport of fluids.

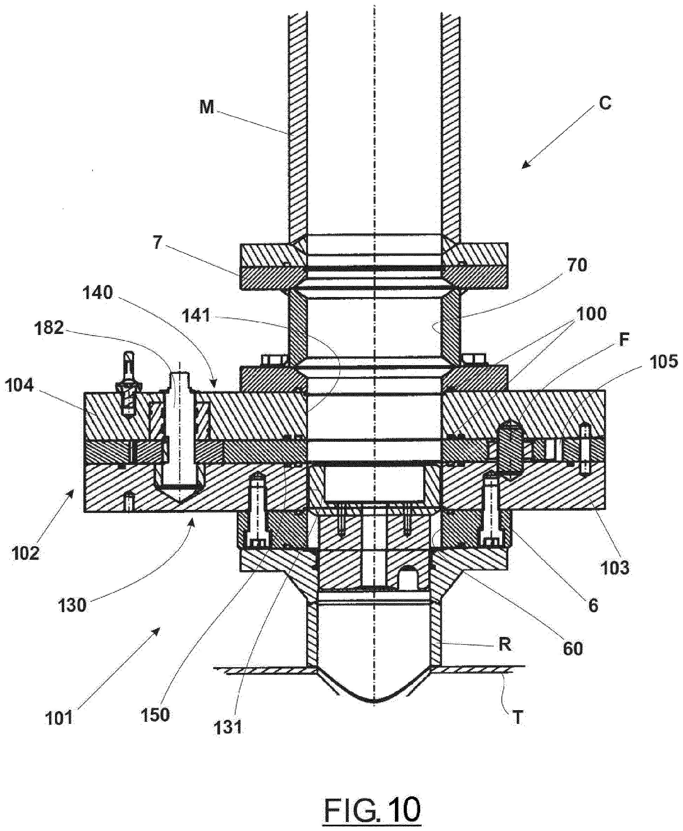

In the discussed example, the branching pipeline C comprises two connectors R (one of which is indicated with broken line in Fig. 3 and partially in Fig. 10), which are integral and in communication with said pipe T, upstream and downstream of its section to be isolated.

A corresponding device 1, 101 with a plugging machine M (not shown in detail, as known) associated thereto, is fastened above each of the connectors R; the plugging machines, upstream and downstream, are connected by a connection pipe (not shown).

Naturally, the above mentioned specific application does not exclude that the device 1, 101 can be used on other pipes in order to close or open them.

The device 1, 101 comprises a box-like body 2, 102, consisting of two half-shells, a lower half-shell 3, 103 and an upper half-shell 4, 104, removably sealed to each other, between which a cavity 5, 105 is defined.

A seal 90, for example of the O-ring type, is interposed between the half-shells 3, 103 and 4, 104, according to a known technique, in order to guarantee the mentioned tightness.

Respective openings 31, 131 and 41, 141, preferably with circular section, which are coaxial and communicating with said cavity 5, 105, are made in each of the walls 30, 130 and 40, 140 of the half-shells 3, 103 and 4, 104.

First fastening means 6, designed to connect the above mentioned device 1, 101 with the underlying section of said branching pipeline C, defined in the example by said connector R, are made integral with the wall 30, 130 of the lower half-shell 3, 103. In particular, in the illustrated embodiments, such first fastening means 6 are constituted by a first flange, situated coaxial with respect to the relative opening 31, 131.

A seal ring, not pointed out, is interposed between the first flange 6 and the connector R, in a way known in itself.

Similarly, the device 1, 101 comprises second fastening means 7, adapted to connect the above mentioned device 1, 101 with the overlying section of the aforesaid branching pipeline C, defined in the example of the plugging machine M. In the described embodiments, such second fastening means consist of a second flange, made integral with the wall 40, 140 of the upper half-shell 4, 104 and situated coaxial to the relative opening 41, 141.

A seal ring, not pointed out, is likewise suitably interposed between the second flange 7 and the plugging machine M.

According to a preferred constructive solution, the diameter of the openings 31, 131 and 41, 141 corresponds to that of the holes 60, 70 of the flanges 6, 7 and to the inner diameter of the pipeline C.

A shutter 50, 150 is slidably situated in the above mentioned cavity 5, 105 and is movable between two extreme positions, an open position H and a closed position K, in which said underlying and overlying sections of the branching pipeline C are set in communication and separated, respectively.

The device 1, 101 comprises also actuating means 8, 108 with a pinion 80, 180 and rack 81, 181, adapted to be operated from outside of the box-like body 2, 102 for moving the shutter 50, 150 between its two positions H, K.

In the following, a first embodiment will be described with reference to figures from 1 to 8B.

In the first embodiment of the device, the shutter 50 is of the sliding type and translates linearly between the positions H and K.

In particular, with reference to figures from 1 to 4B, the box-like body 2 shows, in plan, a rectangular profile with rounded corners and presents a trapezoidal projection 20 located at the centre of one of its longer sides; the openings 31, 41 and consequently, the flanges 6, 7, are arranged along the centre line of the rectangle, cantered with respect to the projection 20.

For this embodiment, the flanges 6, 7 are advantageously fixed to the box-like body 2 in a removable way, for example by means of screws; this is to be considered a known technique and performs the technical task of allowing their substitution with others, should it be necessary to connect the device 1 with particular types of pipeline C or other equipment.

Also the above mentioned sliding shutter 50 has, in plan, a rectangular profile with rounded corners and has a through hole 51, arranged asymmetrical with respect to the longer sides of said profile, so as to be very close to one of the shorter sides of the latter.

The through hole 51 preferably has the same diameter of the openings 31, 41.

The mentioned rack 81 of said actuating means 8 is made integral with the sliding shutter 50, by means of teeth made along the longer side 52 of the shutter, turned toward the trapezoidal projection 20 of the box-like body 2.

The rack 81 is engaged with said pinion 80, arranged in the same cavity 5, in correspondence to the above mentioned trapezoidal projection 20.

The number of teeth of the pinion 80 is determined on the base of the desired gearing down to obtain in the coupling with the rack 81.

The pinion 80 is keyed on a gudgeon 82 carried by the above mentioned upper half-shell 4 and partially protruding therefrom; the protruding portion has a prismatic section (square, hexagonal or the like) in order to allow to engage a tool, for example a spanner or multi point spanner, which can drive the pinion into rotation.

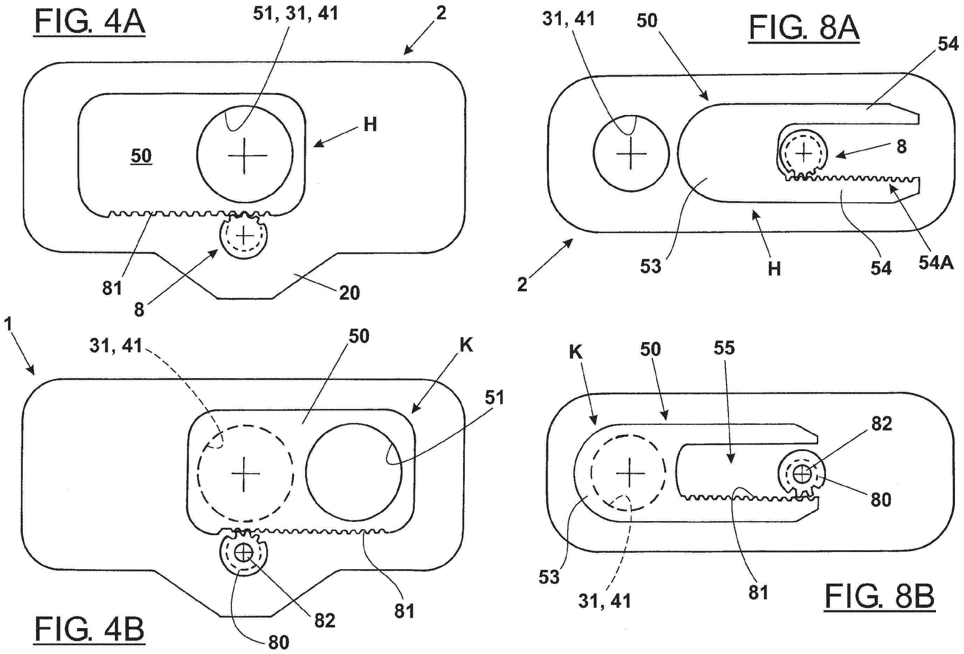

Therefore, the sliding shutter 50 is moved parallel with respect to its longer sides, by means of the pinion 80, between its above mentioned open position H and closed position K, in which said hole 51 is coaxial with (Fig. 4A) and at the side of said openings 31, 41 of the half shells 3, 4, respectively (Fig. 4B).

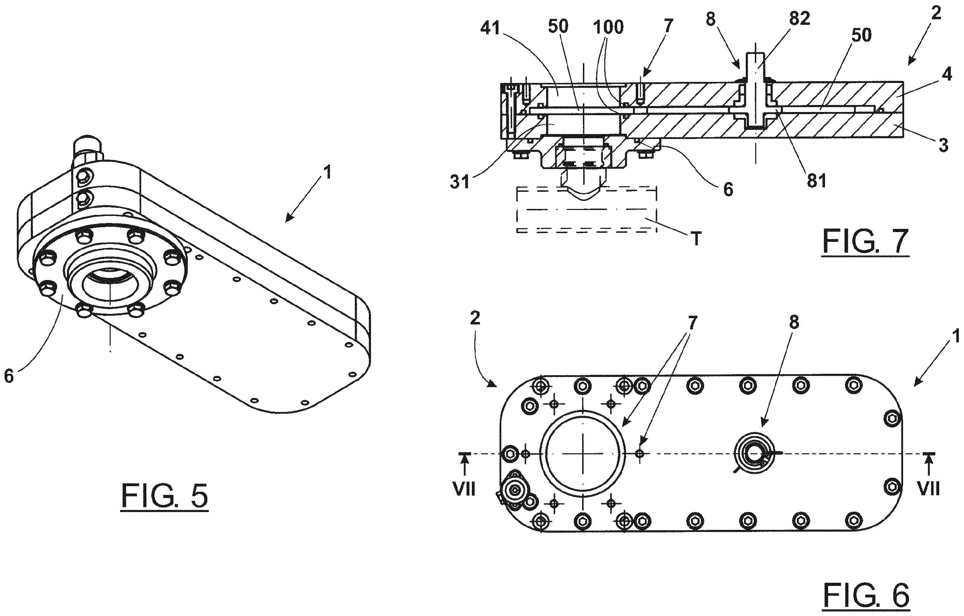

In one version of this first embodiment of the device, shown in Figures 5 to 8B, the box-like body 2 has, in plan view, a rectangular profile with rounded corners; the openings 31, 41, and consequently, the flanges 6, 7, are arranged asymmetrically with respect to the longer sides of said profile, so as to be very close to one of the shorter sides of the latter.

In this embodiment only the first flange 6 is provided removable, while the second flange 7 is made integral with the upper half-shell 4.

The above mentioned sliding shutter 50 has, in plan view, a fork-like shape, in which a head portion 53 is defined, arc-shaped at the end, and presents two rear parallel wings 54, between which a recess 55 is made.

The rack 81 of said actuating means 8 is made integral with the sliding shutter 50, in correspondence to a side 54A of one of said wings 54, turned toward the recess 55.

The rack 81 is engaged with said pinion 80, arranged in the same cavity 5, in correspondence to the above mentioned recess 55.

Also in this case, the number of teeth of the pinion 80 is determined on the basis of the desired gearing down to obtain in the coupling with the rack 81, depending on the space available in the recess 55.

Also in this case, the pinion 80 is keyed on a gudgeon 82 carried by the mentioned upper half-shell 4 and partially protrudes therefrom, having one portion of prismatic section.

Therefore, the sliding shutter 50 is moved parallel with respect to the wings 54, between its open position H and its closed position K, in which the head portion 53 respectively leaves free (Fig. 8A) and covers the openings 31, 41 of the half-shells 3, 4 (Fig. 8B).

Both versions described above, advantageously provide seals 100, for example of the O-ring type, interposed respectively between said lower half-shell 3 and the mentioned sliding shutter 50, as well as between the latter and the above mentioned upper half-shell 4, designed to surround the openings 31, 41 of the same half-shells 3, 4 and to separate them from said cavity 5. In a device, not part of the invention, shown in Figures 9, 10 and 11, the shutter 150, with a circular sector shape and with one side (151) like circumferential arc having the center in a fulcrum (F), oscillates as better described in the following.

The box-like body 102 has, in plan view, a substantially triangular profile with two sides and rounded corners; the openings 131, 141 and consequently, the flanges 6, 7 are eccentric inside said triangle, in particular near one of the rounded sides.

Also in this example the flanges 6, 7 are advantageously fixed to the box-like body 102 by means of screws in a removable way. As already said, this is to be considered a known technique and performs the technical task of allowing their substitution with others, should it be necessary to connect the device 101 with particular types of pipeline C or other equipment.

Consequently, the oscillating shutter 150 has the above mentioned circular section form, with one side 151 like a circumferential arc having the centre in said fulcrum F and included between two sides 152, 153, with substantial radial arrangement. The first side 152 has a semicircular notch 154, whose radius corresponds to that of said openings 131, 141 of the half-shells 103, 104, and is intended to be concentric with the latter in correspondence to the mentioned open position H of the same oscillating shutter 150 (Figs. 9 and 11).

The above mentioned toothed section 181 of the actuating means 108 is made integral with the oscillating shutter 150, in the region of the above mentioned curved side 151, with the teeth turned outside.

The toothed section 181 is engaged with said pinion 180, housed in the same cavity 105 and arranged outside of the oscillating shutter 150 in proximity of a vertex of said triangle.

The number of teeth of the pinion 180 is determined on the basis of the desired gearing down to obtain in the coupling with the rack 181.

The pinion 180 is keyed on a gudgeon 182 carried by the above mentioned upper half-shell 104 and partially protruding therefrom; The protruding portion has a prismatic section (square, hexagonal or the like) in order to allow to engage a tool, for example a spanner or multi point spanner, which can drive the pinion into rotation.

Therefore, the oscillating shutter 150 is driven into rotation with respect to its fulcrum F by means of the pinion 180, between its open position H and its closed position K: as already said, in the first position, the semicircular notch 154 is concentric with the openings 131, 141 and consequently, it does not interfere with them; in the second position, the oscillating shutter 150 is oriented in such a way as to cover the same openings 131, 141 (see in particular Fig. 11).

In a not shown variation, the oscillating shutter 150 does not include the semicircular notch 154. In order to avoid any interference with the openings 131, 141 in the open position K, it is necessary to modify some dimensions, slightly increasing the total sizes.

Also the device 101 advantageously includes seals 100, for example of the O-ring type, interposed between the lower half-shell 103 and the oscillating shutter 150, respectively, as well as between the latter and the upper half-shell 104. The seals 100 are designed to surround the openings 131, 141 of the half-shells 103, 104 and to separate them from the cavity 105.

The previous description points out the peculiar characteristics of the device under discussion, in which the shutter is moved by means of the pinion which acts on the rack.

In the first embodiment, the sliding shutter moves in a straight direction, that is with the best geometry to obtain a regular movement. At the same time, the pinion and rack system allows a limited effort, due to an advantageous gearing down ratio.

In the second example, the oscillating shutter is moved by means of the pinion, which acts on the toothed section. Because of being situated at the maximum distance from the fulcrum F, this involves a favourable lever ratio, which allows a limited operation effort.

The presence of the sealing rings, which close the gap between the shutter and the cavity in both embodiments, allows a drastic reduction of the possibility that the fluid spreads into the latter, practically cancelling the dispersion of the polluting material and reducing the maintenance of the device.

It is to be pointed out that the advantageous aspects of the invention are obtained by a device having compact dimensions and consisting of elements having simple shape. Obviously, this means an easier and less expensive construction.

In all its embodiments and variation, the device maintains its important characteristic, already present in the prior art solutions. This concerns the possibility to substitute the attaching flanges, in such a way that the device is not only suitable for being coupled with connectors and plugging machines of known type, but it can also be advantageously used for any other similar application.

In any case, it is understood that what above is a not limiting example, therefore, possible detail variations that could become necessary for technical and/or functional reasons, are from now considered within the protective scope as defined in the claims below.

## Claims

1. A device for closing a pipeline, with the latter applied as a branch from a pipe (T) for the transport of fluids, said device (1, 101) being of the type designed to be operated from outside to define an open position and a closed position, to allow or prevent, respectively, the inflow of said fluid towards the above mentioned branching pipeline (C), the device including:
- a box-like body (2, 102), consisting of two half-shells, a lower half-shell (3, 103) and an upper half-shell (4, 104), removably sealed to each other, between which a cavity (5, 105) is defined, which communicates with two openings (31, 131; 41, 141), each of which is realized in the wall of one of said half-shells (3,103; 4, 104), in coaxial relation with each other;
- first fastening means (6), designed to connect said device (1, 101) with the underlying section of said branching pipeline (C);
- second fastening means (7), designed to connect said device (1, 101) with the overlying section of said branching pipeline (C);
- a shutter (50, 150), slidingly housed in said cavity (5, 105) and movable between two extreme positions, an open position (H) and a closed position (K), in which said underlying and overlying sections of the branching pipeline (C) are set in communication and separated, respectively;
- pinion (80, 180) and rack (81, 181) actuating means (8, 108), adapted to be operated from outside of said box-like body (2, 102) for moving said shutter (50, 150) between the two relative mentioned positions (H, K);
the device being **characterized in that:**
said box-like body (2) has, in plan view, a rectangular profile with rounded corners and said opening (31, 41) are situated in central position with respect to the longer sides of the box-like body, with a trapezoidal projection (20) located at the centre of one of said longer sides, said pinion (80) being housed in the region of said trapezoidal projection (20);
said sliding shutter (50) has, in plan view, a rectangular profile with rounded corners and presents a through hole (51), arranged asymmetrically with respect to the longer sides of said profile, so as to be very close to one of the shorter sides of the latter;
the above mentioned rack (81) of said actuating means (8) is made along one of the above mentioned longer sides and the same shutter (50) is moved parallel thereto, upon command imprinted by said pinion (80) meshed with the rack (81), between the relative above mentioned open (H) and closed (K) positions, in which said through hole (51) is coaxial with and at the side of said openings (31, 41) of the half shells (3, 4), respectively; and
seals (100) are provided, interposed between said lower half-shell (3) and the aforementioned sliding shutter (50, 150), respectively, as well as between the latter and the above mentioned upper half-shell (4, 104), designed to surround the openings (31, 131; 41, 141) of the same half-shells (3, 103; 4, 104) and to separate them from said cavity (5, 105).

2. A device in accordance with claim 1, **characterized in that** the above mentioned openings (31, 41) as well as the relative flanges (6, 7) are arranged along the centre line of the rectangle, centred with respect to the same projection (20).

3. A device for closing a pipeline, with the latter applied as a branch from a pipe (T) for the transport of fluids, said device (1, 101) being of the type designed to be operated from outside to define an open position and a closed position, to allow or prevent, respectively, the inflow of said fluid towards the above mentioned branching pipeline (C), the device including:
- a box-like body (2, 102), consisting of two half-shells, a lower half-shell (3, 103) and an upper half-shell (4, 104), removably sealed to each other, between which a cavity (5, 105) is defined, which communicates with two openings (31, 131; 41, 141), each of which is realized in the wall of one of said half-shells (3,103; 4, 104), in coaxial relation with each other;
- first fastening means (6), designed to connect said device (1, 101) with the underlying section of said branching pipeline (C);
- second fastening means (7), designed to connect said device (1, 101) with the overlying section of said branching pipeline (C);
- a shutter (50, 150), slidingly housed in said cavity (5, 105) and movable between two extreme positions, an open position (H) and a closed position (K), in which said underlying and overlying sections of the branching pipeline (C) are set in communication and separated, respectively;
- pinion (80, 180) and rack (81, 181) actuating means (8, 108), adapted to be operated from outside of said box-like body (2, 102) for moving said shutter (50, 150) between the two relative mentioned positions (H, K);
the device being **characterized in that** said sliding shutter (50) has, in plan view, a fork-like shape in which there is defined a head portion (53), arc-shaped at the end, and two rear parallel wings (54), between which there is a recess (55), and **in that** the above mentioned rack (81) of said actuating means (8) is formed in one of said wings (54), in correspondence to a respective side (54A) facing said recess (55), with the same shutter (50) designed to be moved, upon command imprinted by said pinion (80) housed within said recess (55) and meshed with the rack (81), parallel to said wings (54), between the relative open (H) and closed (K) positions, in which said head portion (53) is arranged at the side of and in correspondence to said openings (31, 41) of the half shells (3, 4), respectively.

4. A device in accordance with claim 3, **characterized in that** said box-like body (2) has, in plan view, a rectangular profile with rounded corners and **in that** the above mentioned openings (31, 41) as well as the relative fastening means (6, 7) are arranged asymmetrically with respect to the longer sides of said profile, so as to be very close to one of the shorter sides of the latter.

5. A device as in accordance with any of previous claims, **characterized in that** said openings (31, 131; 41, 141) in the lower (3, 103) and upper (4, 104) half-shells have a circular profile, with a diameter similar to that of said branching pipeline (C).

6. A device as in accordance with any of previous claims, **characterized in that** a pin (82, 182) is provided in said actuating means (8, 108), on which pin said pinion (80, 180) is keyed, and which is supported by the aforementioned upper half-shell (4, 104) and partially projects from the latter, aimed at being driven into rotation by a tool.

7. A device in accordance with claim 1 or 3, **characterized in that** the mentioned projecting portion of the pin (82, 182) has a prismatic section.

8. A device as in accordance with any of previous claims, **characterized in that** the above mentioned first (6) and second (7) fastening means comprise respectively a first flange, made integral with said lower half-shell (3, 103) in correspondence to the relative opening (31, 131), and a second flange, made integral with said upper half-shell (4, 104) in correspondence to the relative opening (41, 141).

## Patentansprüche

1. Eine Vorrichtung zum Schließen einer Rohrleitung, wobei letztere als Abzweig von einem Rohr (T) zum Transport von Flüssigkeiten dient, wobei die Vorrichtung (1, 101) von dem Typ ist, der so gestaltet ist, dass er von außen betrieben wird, um eine offene Position und eine geschlossene Position zu definieren, um das Einströmen der Flüssigkeiten in die oben erwähnte Verzweigungsrohrleitung (C) zu ermöglichen bzw. zu verhindern, wobei die Vorrichtung folgendes aufweist:
- einen kastenartigen Körper (2, 102), der aus zwei Halbschalen, d.h. einer unteren Halbschale (3, 103) und einer oberen Halbschale (4, 104), bestehet, die lösbar miteinander versiegelt sind, zwischen denen einen Hohlraum (5, 105) definiert wird, der mit zwei Öffnungen (31, 131; 41, 141) in Verbindung steht, von denen jede in der Wand einer der Halbschalen (3, 103; 4, 104) in koaxialer Beziehung zueinander ausgebildet ist;
- erste Befestigungsmittel (6), die dazu bestimmt sind, die Vorrichtung (1, 101) mit dem darunter liegenden Abschnitt der Verzweigungsrohrleitung (C) zu verbinden;
- zweite Befestigungsmittel (7), die dazu bestimmt sind, die Vorrichtung (1, 101) mit dem darüber liegenden Abschnitt der Verzweigungsrohrleitung (C) zu verbinden;
- einen Verschluss (50, 150), der verschiebbar in dem Hohlraum (5, 105) untergebracht ist und zwischen zwei extremen Positionen, d.h. einer offenen Position (H) und einer geschlossenen Position (K), bewegbar ist, wobei die darunterliegenden und darüber liegenden Abschnitte der Verzweigungsleitung (C) jeweils in Verbindung stehen und getrennt sind;
- Ritzel (80, 180) und Zahnstangen (81, 181) Betätigungsmittel (8, 108), die von außerhalb des kastenartigen Körpers (2, 102) betätigt werden können, um den Verschluss (50, 150) zwischen den zwei erwähnte Positionen (H, K) zu bewegen;
wobei die Vorrichtung **dadurch gekennzeichnet ist dass:**
der kastenartige Körper (2) in der Draufsicht ein rechteckiges Profil mit abgerundeten Ecken hat, und die Öffnung (31, 41) sich in einer zentralen Position in Bezug auf die längeren Seiten des kastenartigen Körpers befindet, mit einem trapezförmigen Vorsprung (20), der sich in der Mitte einer der längeren Seiten befindet, wobei das Ritzel (80) in dem Bereich des trapezförmigen Vorsprungs (20) untergebracht ist;
der bewegbaren Verschluss (50) in der Draufsicht ein rechteckiges Profil mit abgerundeten Ecken hat, und ein Durchgangsloch (51) aufweist, das asymmetrisch in Bezug auf die längeren Seiten des Profils angeordnet ist, so dass es sehr nahe an einem der kürzeren Seiten der letzteren liegt;
die oben erwähnte Zahnstange (81) des Betätigungsmittels (8) entlang einer der oben erwähnten längeren Seiten hergestellt wird, und derselbe Verschluss (50) parallel dazu, auf Befehl durch das Ritzel (80) mit der Zahnstange (81) eingeprägt, zwischen den oben genannten offenen (H) und geschlossenen (K) Positionen bewegt wird, In denen das Durchgangsloch (51) koaxial zu und auf der Seite jeweils der Öffnungen (31, 41) der Halbschalen (3, 4) ist; und
Dichtungen (100) vorgesehen sind, die zwischen der unteren Halbschale (3) und dem oben erwähnten bewegbaren Verschluss (50, 150), sowie zwischen diesen und der oben erwähnten oberen Halbschale (4, 104), angeordnet sind, die um die Öffnungen (31, 131; 41, 141) der gleichen Halbschalen (3, 103; 4, 104) zu umgeben und sie von dem Hohlraum (5, 105) zu trennen ausgebildet sind.

2. Vorrichtung nach Anspruch 1, **dadurch gekennzeichnet, dass** die oben erwähnten Öffnungen (31, 41) sowie die relativen Flansche (6, 7) entlang der Mittellinie des Rechtecks angeordnet, zentriert in Bezug auf denselben Vorsprung (20), angeordnet sind.

3. Eine Vorrichtung zum Schließen einer Rohrleitung, wobei letztere als Abzweig von einem Rohr (T) zum Transport von Flüssigkeiten dient, wobei die Vorrichtung (1, 101) von dem Typ ist, der so gestaltet ist, dass er von außen betrieben wird, um eine offene Position und eine geschlossene Position zu definieren, um das Einströmen der Flüssigkeiten in die oben erwähnte Verzweigungsrohrleitung (C) zu ermöglichen bzw. zu verhindern, wobei die Vorrichtung folgendes aufweist:
- einen kastenartigen Körper (2, 102), der aus zwei Halbschalen, d.h. einer unteren Halbschale (3, 103) und einer oberen Halbschale (4, 104), bestehet, die lösbar miteinander versiegelt sind, zwischen denen einen Hohlraum (5, 105) definiert wird, der mit zwei Öffnungen (31, 131; 41, 141) in Verbindung steht, von denen jede in der Wand einer der Halbschalen (3, 103; 4, 104) in koaxialer Beziehung zueinander ausgebildet ist;
- erste Befestigungsmittel (6), die dazu bestimmt sind, die Vorrichtung (1, 101) mit dem darunter liegenden Abschnitt der Verzweigungsrohrleitung (C) zu verbinden;
- zweite Befestigungsmittel (7), die dazu bestimmt sind, die Vorrichtung (1, 101) mit dem darüber liegenden Abschnitt der Verzweigungsrohrleitung (C) zu verbinden;
- einen Verschluss (50, 150), der verschiebbar in dem Hohlraum (5, 105) untergebracht ist und zwischen zwei extremen Positionen, d.h. einer offenen Position (H) und einer geschlossenen Position (K), bewegbar ist, wobei die darunterliegenden und darüber liegenden Abschnitte der Verzweigungsleitung (C) jeweils in Verbindung stehen und getrennt sind;
- Ritzel (80, 180) und Zahnstangen (81, 181) Betätigungsmittel (8, 108), die von außerhalb des kastenartigen Körpers (2, 102) betätigt werden können, um den Verschluss (50, 150) zwischen den zwei erwähnte Positionen (H, K) zu bewegen;
wobei die Vorrichtung **dadurch gekennzeichnet ist, daß** der bewegbaren Verschluss (50) in der Draufsicht eine gabelartige Form aufweist, in der ein am Ende bogenförmigen Kopfteil (53) und zwei hintere parallele Flügel (54), zwischen denen sich eine Aussparung (55) befindet, definiert sind, und daß die oben erwähnte Zahnstange (81) der Betätigungseinrichtung (8), in einem der Flügel (54) entsprechend einer jeweiligen Seite (54A), die der Ausnehmung (55) zugewandt ist, ausgebildet ist, wobei derselbe Verschluss (50), auf Befehl durch das in der Aussparung (55) untergebrachten und mit der Zahnstange (81) eingeprägten Ritzel (80) parallel zu den Flügeln (54) zwischen den relativ offenen (H) und geschlossene (K) Positionen bewegbar ist, In denen der Kopfabschnitt (53) an der Seite der Öffnungen (31, 41) der Halbschalen (3, 4) bzw. in Übereinstimmung mit diesen Öffnungen angeordnet ist.

4. Vorrichtung nach Anspruch 3, **dadurch gekennzeichnet, dass** der kastenartige Körper (2) in der Draufsicht ein rechteckiges Profil mit abgerundeten Ecken hat, und **dass** die oben erwähnten Öffnungen (31, 41) sowie die zugehörigen Befestigungsmittel (6, 7) asymmetrisch bezüglich die längeren Seiten des Profils, angeordnet sind, so dass sie sehr nahe an einem der kürzeren Seiten der letzteren liegen.

5. Vorrichtung gemäß einem der vorhergehenden Ansprüchen, **dadurch gekennzeichnet, dass** die Öffnungen (31, 131; 41, 141) in der unteren (3, 103) und oberen (4, 104) Halbschale ein kreisförmiges Profil und einen Durchmesser ähnlich dem der Verzweigungsrohrleitung (C) haben.

6. Vorrichtung gemäß einem der vorhergehenden Ansprüchen, **dadurch gekennzeichnet, dass** ein Stift (82, 182) ist in den Betätigungsmitteln (8, 108) vorgesehen, auf welchem das Ritzel (80, 180) verkeilt ist, und der von der vorgenannten oberen Halbschale (4, 104) getragen wird und teilweise von dieser vorsteht, um durch ein Werkzeug in Drehung versetzt zu werden.

7. Vorrichtung nach Anspruch 1 oder 3, **dadurch gekennzeichnet, dass** der erwähnte vorstehende Abschnitt des Stiftes (82, 182) hat einen prismatischen Abschnitt.

8. Vorrichtung gemäß einem der vorhergehenden Ansprüchen, **dadurch gekennzeichnet, dass** die oben erwähnten ersten (6) und zweiten (7) Befestigungsmittel jeweils einen ersten Flansch, der einstückig mit der unteren Halbschale (3, 103) in Übereinstimmung mit der relativen Öffnung (31, 131) ausgebildet ist, Und einen zweiten Flansch, der einstückig mit der oberen Halbschale (4, 104) in Übereinstimmung mit der relativen Öffnung (41, 141) ausgebildet ist, umfassen.

## Revendications

1. Un dispositif pour fermer un pipeline, avec ce dernier appliqué comme une dérivation d'un tuyau (T) pour le transport de fluides, ledit dispositif (1, 101) étant du type conçu pour être manoeuvré de l'extérieur pour définir une position ouverte et une position fermée, pour permettre ou empêcher, respectivement, l'afflux dudit fluide vers la canalisation de dérivation (C) susmentionné, le dispositif comprenant:
- un corps en forme de boîte (2, 102), constitué de deux demi-coques, d'une demi-coque inférieure (3, 103) et d'une demi-coque supérieure (4, 104), scellées l'une à l'autre, entre lesquelles une cavité (5, 105) est définie, qui communique avec deux ouvertures (31, 131; 41, 141), chacun d'eux est réalisé dans la paroi de l'une desdites demi-coquilles (3, 103; 4, 104), en relation coaxiale l'une avec l'autre;
- des premiers moyens de fixation (6), conçu pour relier ledit dispositif (1, 101) à la section sous-jacente de ladite canalisation de dérivation (C);
- des deuxièmes moyens de fixation (7), conçu pour relier ledit dispositif (1, 101) à la section sus-jacente de ladite canalisation de dérivation (C);
- un obturateur (50, 150), logé de manière coulissante dans ladite cavité (5, 105) et mobile entre deux positions extrêmes, une position ouverte (H) et une position fermée (K), dans lequel lesdites sections sous-jacente et sus-jacente de la canalisation de dérivation (C) sont mises en communication et séparées, respectivement;
- des moyens d'actionnement de pignon (80, 180) et de crémaillère (81, 181) (8, 108), conçus pour être actionnés depuis l'extérieur dudit corps en forme de boîte (2, 102) pour déplacer ledit obturateur (50, 150) entre les deux positions relatives mentionnées (H, K);
le dispositif étant **caractérisé en ce que:**
ledit corps en forme de boîte (2) a, en vue de dessus, un profil rectangulaire avec des coins arrondis et lesdites ouvertures (31, 41) sont située en position centrale par rapport aux côtés les plus longs du corps en forme de boîte, avec une saillie trapézoïdale (20) située au centre de l'un desdits côtés les plus longs, ledit pignon (80) étant logé dans la région de ladite saillie trapézoïdale (20);
ledit obturateur (50) a, en vue de dessus, un profil rectangulaire avec des coins arrondis et présente un trou traversant (51), disposé de manière asymétrique par rapport aux côtés les plus longs dudit profil, de façon à être très proche de l'un des côtés les plus longs de ce dernier;
la crémaillère (81) précitée desdits moyens d'actionnement (8) est réalisée le long de l'un des côtés plus longs précités et le même obturateur (50) est déplacé parallèlement à celui-ci, sur commande imprimée par ledit pignon (80) engrenant avec la crémaillère (81), entre les positions ouverte (H) et fermée (K) mentionnées ci-dessus, dans lequel ledit trou traversant (51) est coaxial avec et sur le côté desdites ouvertures (31, 41) des demi-coques (3, 4), respectivement; et
des joints (100) sont prévus, interposés entre ladite demi-coquille inférieure (3) et l'obturateur coulissant (50, 150) précité, respectivement, ainsi qu'entre ce dernier et la demi-coquille supérieure précitée (4, 104), conçus pour entourer les ouvertures (31, 131; 41, 141) des mêmes demi-coques (3, 103; 4, 104) et pour les séparer de ladite cavité (5, 105).

2. Dispositif selon la revendication 1, **caractérisé en ce que** les ouvertures susmentionnées (31, 41) ainsi que les rebords correspondants (6, 7) sont disposés le long de la ligne médiane du rectangle, centrés par rapport à la même saillie (20).

3. Un dispositif pour fermer un pipeline, avec ce dernier appliqué comme une section d'un tuyau (T) pour le transport de fluides, ledit dispositif (1, 101) étant du type conçu pour être manoeuvré de l'extérieur pour définir une position ouverte et une position fermée, pour permettre ou empêcher, respectivement, l'afflux dudit fluide vers la section des tuyau (C) susmentionné, le dispositif comprenant:
- un corps en forme de boîte (2, 102), constitué de deux demi-coques, d'une demi-coque inférieure (3, 103) et d'une demi-coque supérieure (4, 104), scellées l'une à l'autre, entre lesquelles une cavité (5, 105) est définie, qui communique avec deux ouvertures (31, 131; 41, 141), chacun d'eux est réalisé dans la paroi de l'une desdites demi-coquilles (3, 103; 4, 104), en relation coaxiale l'une avec l'autre;
- des premiers moyens de fixation (6), conçu pour relier ledit dispositif (1, 101) à la section sous-jacente de ladite canalisation de dérivation (C);
- des deuxièmes moyens de fixation (7), conçu pour relier ledit dispositif (1, 101) à la section sus-jacente de ladite canalisation de dérivation (C);
- un obturateur (50, 150), logé de manière coulissante dans ladite cavité (5, 105) et mobile entre deux positions extrêmes, une position ouverte (H) et une position fermée (K), dans lequel lesdites sections sous-jacente et sus-jacente de la canalisation de dérivation (C) sont mises en communication et séparées, respectivement;
- des moyens d'actionnement de pignon (80, 180) et de crémaillère (81, 181) (8, 108), conçus pour être actionnés depuis l'extérieur dudit corps en forme de boîte (2, 102) pour déplacer ledit obturateur (50, 150) entre les deux positions relatives mentionnées (H, K);
le dispositif étant **caractérisé en ce que** ledit obturateur coulissant (50) a, en vue de dessus, une forme de fourche dans laquelle est définie une partie de tête (53), en forme d'arc à l'extrémité, et deux ailes parallèles arrière (54), entre lesquelles se trouve un évidement (55), et **en ce que** la crémaillère (81) mentionnée ci-dessus desdits moyens d'actionnement (8) est formée dans l'une desdites ailes (54), en correspondance avec un côté respectif (54A) faisant face audit évidement (55),avec le même obturateur (50) conçu pour être déplacé, sur commande imprimée par ledit pignon (80) logé à l'intérieur dudit évidement (55) et engrenant avec la crémaillère (81), parallèlement auxdites ailes (54), entre les les positions relatives ouverte (H) et fermée (K), dans lequel ladite partie de tête (53) est disposée sur le côté et en correspondance avec lesdites ouvertures (31, 41) des demi-coques (3, 4), respectivement.

4. Dispositif selon la revendication 3, **caractérisé en ce que** ledit corps en forme de boîte (2) a, en vue de dessus, un profil rectangulaire avec des coins arrondis et **en ce que** les ouvertures susmentionnées (31, 41) ainsi que les moyens de fixation (6, 7) relatifs sont disposés de manière asymétrique par rapport à les côtés les plus longs dudit profil, so as to be very close to one of the shorter sides of the latter.

5. Dispositif selon l'une quelconque des revendications précédentes, **caractérisé en ce que** lesdites ouvertures (31, 131; 41, 141) dans les demi-coquilles inférieure (3, 103) et supérieure (4, 104) ont un profil circulaire, avec un diamètre similaire à celui de ladite canalisation de dérivation (C).

6. Dispositif selon l'une quelconque des revendications précédentes, **caractérisé en ce que** une broche (82, 182) est prévue dans lesdits moyens d'actionnement (8, 108), sur laquelle ladite broche (80, 180) est clavetée, et qui est supportée par la demi-coquille supérieure précitée (4, 104) et fait partiellement saillie à partir de celle-ci, destinée à être entraînée en rotation par un outil.

7. Dispositif selon la revendication 1 or 3, **caractérisé en ce que** la partie en saillie mentionnée de la broche (82, 182) a une section prismatique.

8. Dispositif selon l'une quelconque des revendications précédentes, **caractérisé en ce que** les premier (6) et second (7) moyens de fixation mentionnés ci-dessus comprennent respectivement une première bride, solidaire avec ladite demi-coquille inférieure (3, 103) en correspondance avec l'ouverture (31, 131) relative, et une seconde bride, rendue solidaire de ladite demi-coquille supérieure (4, 104) en correspondance avec l'ouverture (41, 141) relative.
